# EUROPÄISCHE PATENTSCHRIFT

(11) **EP 2 012 009 B1**
(45) Veröffentlichungstag und Bekanntmachung des Hinweises auf die Patenterteilung: **01.01.2014**
(21) Anmeldenummer: 08010914.3
(22) Anmeldetag: 16.06.2008
(51) Int. Cl.: F16K 27/02, F16J 15/14, F04B 53/10, F04B 53/16, F04B 53/22

(54) **Rückschlagventileinsatz für eine Brennstoffdosierpumpe**
Return valve insert for a fuel dosing pump
Garniture de soupape de non-retour pour une pompe de dosage de carburant

(30) Priorität: 04.07.2007 DE 102007031033
(43) Veröffentlichungstag der Anmeldung: 07.01.2009
(73) Patentinhaber: Eberspächer Climate Control Systems GmbH & Co. KG, 73730 Esslingen (DE)
(72) Erfinder: Wetzl, Andreas, 73249 Wernau (DE)
(74) Vertreter: Ruttensperger, Bernhard

(56) Entgegenhaltungen:
- EP-A1- 1 748 188
- DE-A1- 19 902 019
- DE-A1-102004 049 171

## Beschreibung

Die vorliegende Erfindung betrifft einen Rückschlagventileinsatz für eine Brennstoffdosierpumpe, insbesondere für ein Fahrzeugheizgerät, umfassend einen Einsatzkörper mit einem durch diesen hindurch verlaufenden Strömungskanal, wobei der Einsatzkörper in seinen beiden Endbereichen zur flüssigkeitsdichten Verbindung ausgebildet ist und zwischen seinen Endbereichen einen Ventilsitz für einen Rückschlagventilkörper aufweist.

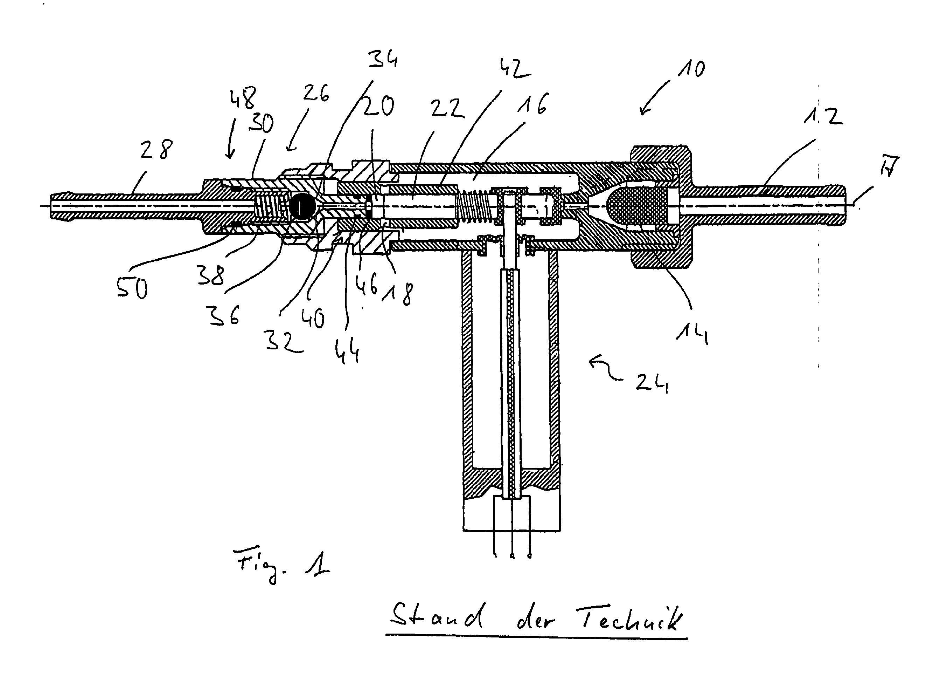

Eine Brennstoffdosierpumpe mit einem derartigen Rückschlagventileinsatz ist aus der DE 10 2004 049 171 A1 bekannt. Der Anspruch 1 ist in zweiteiliger Fassung gegenüber der Offenbarung dieser Druckschrift abgegrenzt. Die Fig. 1 zeigt diese Brennstoffdosierpumpe, welche dazu dient, in einem brennstoffbetriebenen Fahrzeugheizgerät den flüssigen Brennstoff aus einem Reservoir zu einer Brennkammer zu fördern. Der flüssige Brennstoff wird aus einer nicht dargestellte Leitung in der Dosierpumpe 10 über einen Einlassstutzen 12 aufgenommen. Der Brennstoff gelangt dann nach Durchströmung eines Filters 14 in einen Raumbereich 16, der über Öffnungen 18 zu einer Pumpkammer 20 offen ist. Ein in axialer Richtung, bezogen auf eine Längsmittenachse A, hin-und herbewegbarer Pumpkolben 22, welcher angetrieben ist durch eine hier piezoelektrisch wirksame Antriebseinheit 24, verdrängt bei einer Bewegung nach rechts in Fig. 1, also einer Bewegung, bei welcher auch das freie Volumen der Pumpkammer 20 zunimmt, Brennstoff aus dem Raumbereich 16 über die Öffnungen 18 in die Pumpkammer 20 und verdrängt bei Bewegung in der entgegengesetzten Richtung, insbesondere nachdem er die Öffnungen 18 überdeckt, in der Kammer 20 enthaltenen Brennstoff über ein allgemein mit 26 bezeichnetes Rückschlagventil zu einem Auslassstutzen 28.

Das Rückschlagventil 26 ist mit einem Rückschlagventileinsatz 30 aufgebaut, der in Richtung der Längsmittenachse A langgestreckt ist und einen Strömungskanal 32 für den Brennstoff bereitstellt. Näherungsweise in seinem Längenmittenbereich bildet der Rückschlagventileinsatz 30 eine kegelstumpfartige Ventilsitzfläche 34 für einen als Kugel ausgebildeten Rückschlagventilkörper 36. Dieser ist durch eine Vorspannfeder 38 gegen die Ventilsitzfläche 34 vorgespannt.

An einem ersten Endbereich 40 des Rückschlagventileinsatzes 30, welcher Endbereich 40 in ein auch die Pumpkammer 20 bereitstellendes Gehäuse 42 eingreift, ist eine Außenumfangsnut gebildet, in welche ein O-ringartiges Dichtungselement 44 eingesetzt ist. Ferner ist an der Stirnfläche dieses ersten Endbereichs 40 eine Anschlagplatte 46 vorgesehen, die, ebenso wie das Dichtungselement 44, aus elästischem Material aufgebaut ist und für eine Anschlagdämpfung sorgt, wenn der Pumpkolben 22 gegen den als Bewegungsanschlag wirksamen ersten Endbereich 40 stößt.

In einem zweiten Endbereich 48 ist der Aulassstutzen 28 in den Rückschlag-ventileinsatz 30 eingesetzt. Der Auslassstutzen 28 kann ebenfalls eine Außenumfangsnut aufweisen, in welche ein weiteres O-ringartiges Dichtungselement 50 eingesetzt ist, so dass im zusammengefügten Zustand dieses Dichtungselement 50 an einer Innenumfangsfläche des Rückschlagventileinsatzes 30 anliegt. Durch die beiden Dichtungselemente 44, 50 wird eine flüssigkeitsdichte Verbindung des Rückschlagventileinsatzes 30 mit dem Gehäuse 22 einerseits und dem Auslassstutzen 28 andererseits erhalten.

Aus der DE 199 02 019 A1 ist eine Kolbenpumpe mit einem zu einer hin- und hergehenden Hubbbewegung antreibbaren Kolben bekannt. Dieser Kolben ist von einem rohrförmigen Filter umschlossen. Das Filter weist ein Führungselement auf, das durch Anspritzen ein an einer Außenumfangsfläche des Kolbens dichtend anliegendes Dichtelement trägt.

Es ist die Aufgabe der vorliegenden Erfindung, einen Rückschlagventileinsatz für eine Brennstoffdosierpumpe vorzusehen, mit welchern bei erhöhter Betriebssicherheit ein vereinfachter Aufbau erzielt wird.

Erfindungsgemäß wird diese Aufgabe gelöst durch einen Rückschlagventileinsatz für eine Brennstoffdosierpumpe, insbesondere für ein Fahrzeugheizgerät, umfassend einen Einsatzkörper mit einem durch diesen hindurch verlauferiden Strömungskanal, wobei der Einsatzkörper in seinen beiden Endbereichen zur flüssigkeitsdichten Verbindung ausgebildet ist und zwischen seinen Endbereichen einen Ventilsitz für einen Rückschlagventilkörper aufweist.

Dabei ist weiter vorgesehen, dass in wenigstens einem der Endbereiche der Einsatzkörper ein an diesen angespritztes elastisches Dichtungselement trägt.

Da ein derartiger Rückschlagventileinsatz auch als Bewegungsanschlag für einen Pumpkolben einer Brennstoffdosierpumpe wirksam sein kann, ist zur weiteren Vereinfachung des Gesamtaufbaus vorgesehen, dass das erste Dichtungselement mit einem hülsenartigen Ansatz eine Sümfläche des Einsatzkörpers am ersten Endbereich wenigstens teilweise übergreift.

Durch das Vorsehen zumindest eines Dichtüngselements nicht als separates Bauteil, das in eine Umfangnut eingesetzt wird, sondern als an den Einsatzkörper durch Anspritzen unmittelbar angeformtes und somit auch fest an diesem anhaftendes Bauteil, werden verschiedene Vorteile kombiniert. Zum einen wird eine Verbundbaugruppe geschaffen, die als solche in den Fertigungsprozess eingeführt werden kann und nicht durch vorherige Montage verschiedener Bauteile zusammengesetzt werden muss. Dies ver ringert die Gefahr von Fehlern bei der Montage und verringert ebenfalls die Gefahr, dass beim Zusammensetzen einer Brennstoffdosierpumpe durch ungewollte Verschiebungen ein derartiges Dichtungselement beschädigt wird bzw. in eine Positionierung gelangt, in welcher es eine Dichtungsfunktion nicht mehr korrekt erfüllen kann.

Beispielsweise kann vorgesehen sein, dass an einem ersten Endbereich ein erstes Dichtungselement den Einsatzkörper außen umgibt.

Um hier eine sehr stabile Halterung zu erlangen, wird weiter vorgeschlagen, dass das erste Dichtungselement in eine Außenumfangsnut des Einsatzkörpers eingeformt ist.

An einem zweiten Endbereich kann ein zweites Dichtungselement an einer Innenumfangsfläche des Einsatzkörpers vorgesehen sein.

Die vorliegende Erfindung betrifft ferner eine Brennstoffdosierpumpe, insbesondere für ein Fahrzeugheizgerät, welche mit einem erfindungsgemäß aufgebauten Rückschlagventileinsatz ausgebildet ist. Dieser Rückschlagventileinsatz kann, wie vorangehend bereits dargelegt, mit seinem ersten Endbereich einen Bewegungsanschlag für ein Pumporgan, also beispielsweise einen Pumpkolben, bilden, wobei durch Vorsehen eines die Stirnseite des Einsatzkörpers übergreifenden und integral mit dem ersten Dichtungselement angeformten elastischen Materials für eine Anschlagdämpfung gesorgt werden kann.

Die vorliegende Erfindung wird nachfolgend mit Bezug auf die beiliegenden Figuren detailliert erläutert. Es zeigt:
- Fig. 1: eine aus dem Stand der Technik bekannte Brennstoffdosierpumpe mit einem Rückschlagventileinsatz;
- Fig. 2: eine Längsschnittansicht eines erfindungsgemäß aufgebauten Rückschlagventileinsatzes.

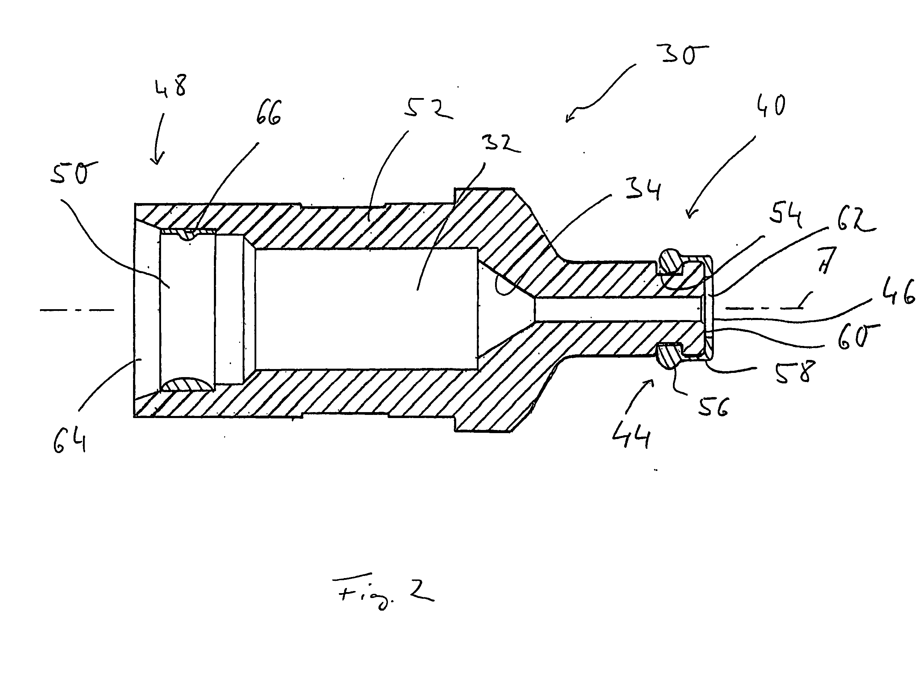

In Fig. 2 ist ein erfindungsgemäß aufgebauter Rückschlagventileinsatz 30 gezeigt, der grundsätzlich bei einer Brennstoffdosierpumpe, wie sie vorangehend mit Bezug auf die Fig. 1 beschrieben wurde, eingesetzt werden kann. Es sei in diesem Zusammenhang darauf hingewiesen, dass selbstverständlich an dieser Brennstoffdosierpumpe verschiedenste Variationen vorgesehen sein können, beispielsweise hinsichtlich des Antriebs für den Pumpkolben 22, der selbstverständlich auch elektromotorisch mit einem mit dem Pumpkolben 22 verbundenen Anker und einer diesen umgebenden Spulenanordnung ausgebildet sein kann.

Der Rückschlagventileinsatz 30 umfasst einen in Richtung der Längsmittenachse A langgestreckten Einsatzkörper 52, welcher die beiden Endbereiche 40 und 48 aufweist. Am ersten Endbereich 40, also demjenigen Bereich, mit welchem der Rückschlagventileinsatz in das Gehäuse 42 einzuführen ist, ist der Einsatzkörper 52 mit vergleichsweise kleiner Außenabmessung ausgestaltet, welche im Wesentlichen auch der Außenabmessung des Pumpkolbens 22 entspricht, so dass in dem Gehäuse 22 eine durch dieses hindurchgehende und auch die Pumpkammer 20 bereitstellende Öffnung mit im Wesentlichen konstanter Innenabmessung vorgesehen sein kann. Am Endbereich 40 ist am Einsatzkörper 52 eine Umfangsnut 54 vorgesehen, in welche das erste Dichtungselement 44 eingreift. Dieses erste Dichtungselement 44 ist nicht als separates O-ringartiges Dichtungselement in die Umfangsnut 54 eingesetzt, sondern ist an den Endbereich 40 des Einsatzkörpers 52 angespritzt. D.h., beim Herstellungsvorgang des Dichtungselements 44 wird der Endbereich 40 des Einsatzkörpers 52 in eine entsprechende Spritzform eingesetzt bzw. bildet mit seiner Außenumfangsfläche einen Teil der Spritzform, in welche dann das zunächst noch fließfähige Material des ersten Dichtungselements 44 eingespritzt wird. Dabei zeigen die obere und die untere Hälfte der Fig. 2 mit Hinblick auf dieses erste Dichtungselement 44 zwei verschiedene Ausgestaltungsformen. In beiden Ausgestaltungsformen ragt das Dichtungselement 44 mit einem wulstartigen Bereich 56 über den Außenumfang des Einsatzkörpers 52 am ersten Endbereich 40 hervor. In der in Fig. 2 rechts unten gezeigten Variante ist das Dichtungselement 44 so geformt, dass es im Wesentlichen die vollständige Umfangsnut 54 ausfüllt, während es bei der in Fig. 2 rechts oben erkennbaren Variante mit im Wesentlichen auch wulstartigem bzw. gerundetem Gesamtquerschnitt ausgebildet ist.

Zusammen mit dem Dichtungselement 44 wird ein hülsenartiger Ansatz 58 an dem Endbereich 40 des Einsatzkörpers 52 angeformt. Dieser Ansatz 58 bildet also einen integralen Bestandteil des Dichtungselements 44 und überdeckt den Endbereich 44 ausgehend von dem in die Umfangsnut 54 eingreifenden Bereich des Dichtungselements 44. Insbesondere überdeckt der hülsenartige Ansatz 58 auch eine Stirnseite 60 des Einsatzkörpers 52 am ersten Endbereich 44 zumindest bereichsweise, jedoch so, dass mit einer in diesem Ansatz 58 gebildeten zentralen Öffnung 62 die Möglichkeit geschaffen ist, dass der zu fördernde flüssige Brennstoff durch den Strömungskanal 32 hindurchtreten kann. Mit dem die Stirnseite 60 überdeckenden Bereich bildet das Dichtungselement 44 bzw. der Ansatz 58 eine Anschlagplatte 46, an welcher der Pumpkolben 22 bei seiner Hin- und Herbewegung anstoßen kann. Da das gesamte Dichtungselement 44 aus elastischem, beispielsweise gummiartigem Material aufgebaut ist, wird also hier nicht nur eine Dichtwirkung im Anschluss an das Gehäuse 42 erhalten, sondern auch eine Anschlagdämpfungsfunktionalität realisiert.

Im zweiten Endbereich 48 ist der Einsatzkörper 52 mit deutlich größerer Abmessung ausgebildet und bildet eine Einsatzöffnung 64 zur Aufnahme des Auslassstutzens 28. An einer beispielsweise im Wesentlichen zylindrischen Innenumfangsfläche 66 ist das zweite Dichtungselement 50 vorgesehen, das, ebenso wie das erste Dichtungselement 44 an den Einsatzkörper 52 angespritzt ist. Auch hier wird also ein fester, durch das aushärtende Material des Dichtungselements 50 auch materialschlüssiger Verbund erzielt. Man erkennt auch hier in Fig. 2 oben und unten verschiedene Querschnittsgeometrien des zweiten Dichtungselements 50. Während in Fig. 2 links oben das zweite Dichtungselement 50 mit im Wesentlichen gleichmäßiger Dichte und lediglich im axial mittleren Bereich einer wulstartigen oder höckerartigen Erhöhung ausgebildet ist, ist in Fig. 2 links unten das Dichtungselement 50 mit kreisartiger oder allgemein gekrümmter Querschnittsgeometrie ausgebildet.

Durch das Anformen bzw. Anspritzen der beiden Dichtungselemente 44, 50 ist dafür gesorgt, dass beim Zusammensetzen einer Brennstoffdosierpumpe diese Dichtungselemente insbesondere auf Grund ihrer materialschlüssigen, also klebenden Anbindung an den Einsatzkörper 52 in definierter Positionierung verbleiben und somit für einen sicheren Dichtabschluss sorgen. Dies führt nicht nur zur höheren Betriebssicherheit, sondern vereinfacht grundsätzlich auch den Vorgang des Zusammensetzens einer Brennstoffdosierpumpe.

## Patentansprüche

1. Rückschlagventileinsatz für eine Brennstoffdosierpumpe, insbesondere für ein Fahrzeugheizgerät, umfassend einen Einsatzkörper (52) mit einem durch diesen hindurch verlaufenden Strömungskanal (32), wobei der Einsatzkörper (52) in seinen beiden Endbereichen (40, 48) zur flüssigkeitsdichten Verbindung ausgebildet ist und zwischen seinen Endbereichen (40, 48) einen Ventilsitz (34) für einen Rückschlagventilkörper aufweist,
**dadurch gekennzeichnet, dass** in wenigstens einem der Endbereiche (40, 48) der Einsatzkörper (52) ein an diesen angespritztes elastisches Dichtungselement (44, 50) trägt, und dass an einem ersten Endbereich (40) ein erstes Dichtungselement (44) den Einsatzkörper (52) außen umgibt, wobei das erste Dichtungselement (44) mit einem hülsenartigen Ansatz (58) eine Stimfläclie (60) des Einsatzkörpers (52) am ersten Endbereich (40) wenigstens teilweise übergreift.

2. Rückschlagventileinsatz nach Anspruch 1,
**dadurch gekennzeichnet, dass** das erste Dichtungselement (44) in eine Außenumfangsnut (62) des Einsatzkörpers (52) eingeformt ist.

3. Rückschlagventileinsatz nach Anpruch 2 oder 3,
**dadurch gekennzeichnet, dass** an einem zweiten Endbereich (48) ein zweites Dichtungselement (50) an einer Innenumfangsfläche (66) des Einsatzkörpers (52) vorgesehen ist.

4. Brennstoffdosierpumpe, insbesondere für ein Fahrzeugheizgerät, umfassend einen Rückschlagventileinsatz (30) nach einem der vorangehenden Ansprüche.

5. Brennstoffdosierpumpe nach Anspruch 4,
**dadurch gekennzeichnet, dass** der Rückschlagventileinsatz (30) mit seinem ersten Endbereich (44) einen Bewegungsanschlag für ein Pumporgan (22) bildet.

## Claims

1. A non-return valve insert for a fuel dosing pump, in particular for a vehicle heating device, comprising an insert body (52) with a flow channel (32) passing through, said insert body (52) being adapted for a fluid tight connection in its two end sections (40, 48) and comprising between its end sections (40, 48) a valve seat (34) for a nonreturn valve body,
**characterized in that**, in at least one of the end sections (40, 48), said insert body (52) carries an elastic sealing element (44, 50), injection-moulded to the latter, and **in that** at a first end section (40) a first sealing element (44) surrounds the outside of said insert body (52), said first sealing element (44) at least partly engaging with a sleeve like connection (58) a front surface (60) of said insert body (52) at said first end section (40).

2. The non-return valve according to claim 1,
**characterized by** said first sealing element (44) being fit into an outer circumferential groove (62) of said insert body (52).

3. The non-return valve according to claim 2 or 3,
**characterized by** a second sealing element (50) being provided at a second end section (48) at an inner circumferential surface (66) of said insert body (52).

4. Fuel dosing pump, in particular for a vehicle heating device, comprising a non-return valve insert (30) according to one of the preceding claims.

5. Fuel dosing pump according to claim 4,
**characterized by** said non-return valve insert (30) forming with its first end section (44) a movement abutment for a pump element (22).

## Revendications

1. Une soupape de non-retour pour une pompe de dosage de carburant, en particulier pour un dispositif de chauffage de véhicule, comprenant un corps d'insert (52) avec un canal d'écoulement (32) passant à travers ce dernier, le corps d'insert (52) étant adapté dans ses deux parties d'extrémité (40, 48) pour un raccord étanche aux liquides et comprenant entre ses parties d'extrémité (40, 48) un siège de soupape (34) pour un corps de soupape de non-retour,
**caractérisée en ce que**, dans au moins une des parties d'extrémité (40, 48), le corps d'insert (52) soutient un élément d'étanchéité élastique (44, 50) injecté conjointement avec ce dernier, et **en ce que**, dans une première partie d'extrémité (40), un premier élément d'étanchéité (44) entoure le corps d'insert (52) à l'extérieur, le premier élément d'étanchéité (44) engageant par un raccord en forme de douille (58) au moins partiellement une face d'extrémité (60) du corps d'insert (52) à la première partie d'extrémité (40).

2. La soupape de non-retour selon la revendication 1,
**caractérisée par** le premier élément d'étanchéité (44) étant formé dans une rainure circonférentielle extérieure (62) du corps d'insert (52).

3. La soupape de non-retour selon la revendication 2 ou 3,
**caractérisée par** un deuxième élément d'étanchéité (50) étant prévu à une surface circonférentielle intérieure (66) du corps d'insert (52) à une deuxième partie d'extrémité (48).

4. Une pompe de dosage de carburant, en particulier pour un chauffage de véhicule, comprenant un insert de soupape de non-retour (30) selon une des revendications précédentes.

5. La pompe de dosage de carburant selon la revendication 4,
**caractérisée par** l' insert de soupape de non-retour (30) formant, avec sa première partie d'extrémité (44), un élément de butée pour un élément de pompe (22).
